Europäisches Patentamt

European Patent Office

Office européen des brevets

(19)

(11) **EP 1 468 961 A2**

(12) **EUROPÄISCHE PATENTANMELDUNG**

(43) Veröffentlichungstag:
20.10.2004 Patentblatt 2004/43

(51) Int Cl.⁷: **C01B 31/02**, B03C 5/02

(21) Anmeldenummer: 04004929.8

(22) Anmeldetag: 03.03.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **08.04.2003 DE 10315897**

(71) Anmelder: **Forschungszentrum Karlsruhe GmbH**
**76133 Karlsruhe (DE)**

(72) Erfinder:
• **Krupke, Ralph Dr.**
**76297 Stutensee (DE)**
• **Hennrich, Frank, Dr.**
**76133 Karlsruhe (DE)**

(74) Vertreter: **Rückert, Friedrich, Dr.**
**Forschungszentrum Karlsruhe GmbH,**
**Stabsabteilung Patente und Lizenzen,**
**Postfach 3640**
**76021 Karlsruhe (DE)**

(54) **Verfahren, Vorrichtung und Verwendung einer Vorrichtung zur Trennung der metallischen von den halbleitenden Kohlenstoff-Nanoröhren**

(57) Die Erfindung betrifft die Trennung von metallischen und halbleitenden Kohlenstoff-Nanoröhren.

Das erfindungsgemäße Verfahren umfasst die folgenden Schritte:

a) Bereitstellen einer Suspension, die eine Vielzahl einzelner metallischer und halbleitender Kohlenstoff-Nanorohren in einer Flüssigkeit enthält, deren Dielektrizitätskonstante $\varepsilon_L$ die Bedingung $\varepsilon_M > \varepsilon_L > \varepsilon_H$ erfüllt, wobei $\varepsilon_M$ und $\varepsilon_H$ die Dielektrizitätskonstanten der metallischen bzw. der halbleitenden Spezies sind;

b) Anlegen eines inhomogenen elektrischen Wechselfeldes im Bereich der Suspension, wobei das Feld die beiden Spezies räumlich voneinander trennt;

c) Entnehmen einer oder beider der getrennten Spezies.

Metallische Kohlenstoff-Nanoröhren sind als molekulare Drähte geeignet; halbleitende Kohlenstoff-Nanoröhren eignen sich als molekulare Feldeffekt-Transistoren. Beide Spezies sind potenzielle Bausteine für nanoelektronische Schaltkreise.

EP 1 468 961 A2

**Beschreibung**

Die Erfindung betrifft ein Verfahren, eine Vorrichtung und die Verwendung einer Vorrichtung zur Trennung von metallischen und halbleitenden Kohlenstoff-Nanoröhren.

Als *Kohlenstoff-Nanoröhren* werden Makromoleküle bezeichnet, in denen Kohlenstoff-Atome die Außenwand einer Röhre bilden. Im Modell wird eine *einwändige* Kohlenstoff-Nanoröhre durch einen planaren Streifen aus hexagonal angeordneten Kohlenstoff-Atomen, der nahtlos zu einer Röhre aufgerollt wird, beschrieben. Mehrere konzentrisch ineinander angeordnete Röhren bezeichnet man als *mehrwändige* Kohlenstoff-Nanoröhren.

Typische einwändige Kohlenstoff-Nanoröhren weisen einen Durchmesser von 0,5 nm bis 10 nm auf; mehrwändige Kohlenstoff-Nanoröhren besitzen entsprechend einen größeren Durchmesser. Die Länge typischer Kohlenstoff-Nanoröhren beträgt 100 nm bis hin zu einigen 10 Mikrometern, wobei es Verfahren gibt, mit denen Kohlenstoff-Nanoröhren sowohl in Stücke geschnitten als auch durch Aneinandersetzen verlängert werden können.

Kohlenstoff-Nanoröhren werden aufgrund ihrer elektronischen Eigenschaften in zwei Klassen unterteilt: *metallische* und *halbleitende* Kohlenstoff-Nanoröhren. Metallische Kohlenstoff-Nanoröhren sind als molekulare Drähte geeignet, da sie sehr große Stromtragfähigkeiten besitzen und robust gegen Elektromigration sind. Halbleitende Kohlenstoff-Nanoröhren eignen sich als molekulare Transistoren. Beide Spezies sind aufgrund ihrer nanoskaligen Abmessungen viel versprechende Bausteine für nanoelektronische Schaltkreise.

Zur Herstellung nanoskaliger Schaltkreise aus Kohlenstoff-Nanoröhren ist es zwingend erforderlich, metallische und halbleitende Kohlenstoff-Nanoröhren separat manipulieren zu können. Hierfür ist es notwendig, möglichst sortenrein metallische oder halbleitende Kohlenstoff-Nanoröhren herzustellen bzw. diese voneinander zu trennen.

Davon ausgehend ist es die Aufgabe der Erfindung, ein Verfahren, eine Vorrichtung und die Verwendung einer Vorrichtung zur Trennung von metallischen und halbleitenden Kohlenstoff-Nanoröhren anzugeben.

Gelöst wird diese Aufgabe durch die Verfahrensschritte des Patentanspruchs 1, durch den Patentanspruch 6 und die Merkmale des Patentanspruchs 7. Die Unteransprüche beschreiben vorteilhafte Ausgestaltungen der Erfindung.

Mit dem erfindungsgemäßen Verfahren lassen sich metallische von halbleitenden Kohlenstoff-Nanoröhren, die zusammen in einer Flüssigkeit als Suspension, vorliegen, derart voneinander trennen, dass sich diese jeweils separat weiter verwenden lassen.

Das erfindungsgemäße Verfahren basiert darauf, dass die Kohlenstoff-Nanoröhren zunächst derart in eine Flüssigkeit eingebracht werden, dass sie nicht aneinander haften. Im Falle, dass die Kohlenstoff-Nanoröhren nicht vereinzelt vorliegen, sondern auf Grund der *van-der-Waals-Wechselwirkung* zwischen den Röhren eine Agglomeration zu Bündeln aufweisen, würde keine Trennung der Spezies erfolgen, da ein einzelnes Bündel in der Regel sowohl aus metallischen als auch aus halbleitenden Kohlenstoff-Nanoröhren gebildet wird. Statistisch gesehen enthält damit die weitaus überwiegende Mehrzahl der Bündel mindestens eine metallische Kohlenstoff-Nanoröhre, so dass sich nahezu sämtliche Bündel insgesamt wie eine metallische Kohlenstoff-Nanoröhre verhalten würden. Ein Verfahren zur Vereinzelung der Kohlenstoff-Nanoröhren ist in [1] offenbart.

Für das erfindungsgemäße Verfahren kommt es andererseits jedoch nicht darauf an, auf welche Art und Weise die verwendeten Kohlenstoff-Nanoröhren hergestellt werden. Hierfür bekannte Verfahren sind unter anderem die Laser-Ablation, die Disproportionierung von Kohlenmonoxid *(HiPCO),* Bogenentladungen *(Arc-Discharge)* oder *Chemical Vapour Deposition* (*CVD*).

Entscheidend für das erfindungsgemäße Verfahren ist, dass die Dielektrizitätskonstante der Flüssigkeit $\varepsilon_L$, die Bedingung

$$\varepsilon_M > \varepsilon_L > \varepsilon_H \qquad (1)$$

erfüllt, wobei $\varepsilon_M$ die Dielektrizitätskonstante der metallischen Kohlenstoff-Nanoröhren und $\varepsilon_H$ die Dielektrizitätskonstante der halbleitenden Kohlenstoff-Nanoröhren ist. Aus theoretischen Überlegungen heraus lässt sich ableiten, dass der Wert der Dielektrizitätskonstanten der metallischen Kohlenstoff-Nanoröhren $\varepsilon_M > 1000$, d. h. sehr groß ist, während die Dielektrizitätskonstante der halbleitenden Kohlenstoff-Nanoröhren einen niedrigen Wert von $\varepsilon_H \approx 10$ annimmt. Aus diesem Grunde sind bevorzugt polare Flüssigkeiten und besonders bevorzugt eine wässrige Lösung mit einer Dielektrizitätskonstanten $\varepsilon_L = 81$ als Flüssigkeit für den Ausgangspunkt des erfindungsgemäßen Verfahrens geeignet.

Zur Durchführung des erfindungsgemäßen Verfahrens wird weiterhin eine Anordnung zur Erzeugung von inhomogenen elektrischen Wechselfeldern benötigt. Derartige Anordnungen sind etwa aus der Dielektrophorese bekannt. Zum Beispiel offenbart die US 2003/0048619 A1 eine Vorrichtung und ein Verfahren zur Herstellung von elektrisch leitenden Mikrodrähten insbesondere aus nanoskaligen Goldpartikeln mit einer Größe von 15 nm bis 30 nm, die zwischen einem Elektrodenpaar, das eine Lücke von einigen Mikrometern bis zu wenigen Zentimetern aufweist, an die ein Wechselfeld von 50 V bis 250 V mit einer Frequenz von 50 Hz bis 1 kHz angelegt wurde, gebildet werden.

Erfindungsgemäß wird im Bereich der Suspension, die beide Spezies der Kohlenstoff-Nanoröhren enthält, ein inhomogenes elektrisches Wechselfeld angelegt. Alternativ wird die Suspension in ein derartiges Wechselfeld eingebracht. Im inhomogenen elektrischen Wechselfeld erfährt eine Kohlenstoff-Nanoröhre dielektrophoretische Kräfte $\vec{F}(\omega)$ gemäß

$$\vec{F}(\omega) \propto \text{Re}[\varepsilon_T(\omega)]\text{Re}[\frac{\varepsilon_T(\omega) - \varepsilon_L(\omega)}{\varepsilon_T(\omega) + \varepsilon_L(\omega)}]\nabla E_{rms}^2, \quad (2)$$

wobei $\varepsilon_T$ die Dielektrizitätskonstante der betrachteten Kohlenstoff-Nanoröhre, $\varepsilon_L$ die Dielektrizitätskonstante der Flüssigkeit, $E_{rms}$ der Effektivwert der elektrischen Feldstärke und $\omega$ die Frequenz des elektrischen Wechselfeldes sind.

Solange ein inhomogenes elektrisches Wechselfeld im Bereich der Suspension anliegt, bewegen sich metallische Kohlenstoff-Nanoröhren mit $\varepsilon_T = \varepsilon_M$ nach Gleichung 2 in Richtung des Feldgradienten, das heißt sie erfahren Kräfte mit positiven Vorzeichen, die sie in Gebiete mit höherer Feldstärke bringen. Entsprechend erfahren halbleitende Kohlenstoff-Nanoröhren mit $\varepsilon_T = \varepsilon_H$ Kräfte mit negativen Vorzeichen und werden im Vergleich zur metallischen Spezies in die entgegen gesetzte Richtung aus dem elektrischen Wechselfeld heraus gedrängt.

Auf diese Art lassen sich metallische und halbleitende Kohlenstoff-Nanoröhren räumlich voneinander trennen und können anschließend auf verschiedene Weise separiert werden. Zum Beispiel lässt sich ein Substrat, auf dem sich die metallischen Kohlenstoff-Nanoröhren niedergeschlagen haben, unter Ultraschalleinwirkung abspülen.

Nachdem sich alle metallischen Kohlenstoff-Nanoröhren zum Beispiel auf einem Substrat niedergeschlagen haben, das anschließend aus der Suspension entfernt wird, können in einer besonderen Ausgestaltung in einem weiteren Schritt die halbleitenden Kohlenstoff-Nanoröhren als Suspension in einer zweiten Flüssigkeit mit einer Dielektrizitätskonstante $\varepsilon_L' < \varepsilon_H$ von weiteren Bestandteilen getrennt werden. Da die Dielektrizitätskonstante der halbleitenden Kohlenstoff-Nanoröhren einen niedrigen Wert von $\varepsilon_H \approx 10$ besitzt, sind als zweite Flüssigkeit unpolare Substanzen mit einer niedrigen Dielektrizitätskonstanten wie z. B. Toluol ($\varepsilon = 5$), Cyclohexan ($\varepsilon = 2,0$), Benzol ($\varepsilon = 2,3$) oder Tetrachlorkohlenstoff ($\varepsilon = 2,2$) geeignet.

Die Höhe der Frequenz des anzulegenden elektrischen Wechselfeldes muss einen Minimalwert überschreiten, der sich aus der Überlegung ergibt, dass Kohlenstoff-Nanoröhren oftmals selbst eine statische elektrische Ladung tragen, und zwar unabhängig von ihrer Zugehörigkeit zur metallischen oder halbleitenden Spezies. Im Gleichfeld dominieren wegen dieses Ladungszustandes die elektrophoretischen Kräfte die Bewegung der Kohlenstoff-Nanoröhren. Um diesen für eine Trennung der Spezies ungewünschten Effekt zu vermeiden, müssen daher elektrische Wechselfelder mit ausreichend hoher Frequenz, d. h. höher als 10 kHz, verwendet werden.

Das inhomogene elektrische Wechselfeld, das im Bereich der Suspension anliegt, weist eine Peak-to-Peak-Feldstärke ausgewählt aus dem Bereich zwischen $10^3$ V/m und $10^9$ V/m, bevorzugt $10^4$ V/m bis $10^6$ V/m, besonders bevorzugt $10^5$ V/m, auf. Bei Feldstärken oberhalb von $10^9$ V/m treten merkliche Veränderungen der Bandstruktur der Kohlenstoff-Nanoröhren auf; bei niedrigeren Feldstärken als $10^3$ V/m wird der trennende Effekt des Wechselfeldes zu gering.

Die Zeitskala für die Trennung der beiden Spezies liegt im Minutenbereich; die Trennung kann jedoch je nach gewünschten Trennungsgrad auch einige Stunden dauern. Nach einer für die Trennung ausreichenden Zeit bleibt die Wechselspannung angeschaltet oder wird ausgeschaltet und die Flüssigkeit (Suspension), die in der beschriebenen bevorzugten Ausführungsform die halbleitende Spezies enthält, entfernt. Die metallischen Kohlenstoff-Nanoröhren dagegen, die an den Oberflächen der Elektroden haften, lassen sich beispielsweise mit Ultraschall in eine zweite Flüssigkeit als Suspension ablösen.

Der Nachweis, dass das erfindungsgemäße Verfahren die beiden Spezies von Kohlenstoff-Nanoröhren auch tatsächlich effektiv trennt, wird durch Raman-Streuung erbracht. Kohlenstoff-Nanoröhren zeigen resonante Raman-Streuung, wenn diese mit elektromagnetischer Strahlung einer Wellenlänge beaufschlagt werden, deren Energie den Anregungen zwischen elektronischen Bändern mit sehr hoher Zustandsdichte, den so genannten *van-Hove Singularitäten,* entspricht [2]. Geometrisch gesehen, werden dabei verschiedene Schwingungsmoden der einwändige Kohlenstoff-Nanoröhre angeregt. Hierbei stellt insbesondere die Frequenz der Atmungsmode (*radial breathing mode,* kurz *rbm*) ein direktes Maß für den Durchmesser der angeregten Kohlenstoff-Nanoröhre dar.

Ist der Durchmesser der Kohlenstoff-Nanoröhre bekannt, lässt sich unter Berücksichtigung der Anregungsenergie mit Hilfe von Bandstrukturrechnungen für die metallischen bzw. halbleitenden Kohlenstoff-Nanoröhren zeigen, welche der beiden Spezies im betreffenden Wellenlängenbereich Raman-aktiv ist [3]. Die Atmungsmoden von metallischen und halbleitenden Kohlenstoff-Nanoröhren liegen unter den gewählten Bedingungen (Röhrenmaterial, Anregungswellenlänge) so weit auseinander, dass theoretische Unzulänglichkeiten nichts an der Interpretation der Daten ändern.

Erfindungsgemäß erfolgt die Trennung von metallischen und halbleitenden Kohlenstoff-Nanoröhren in einer Zelle, die zur Durchführung einer Dielektrophorese geeignet ist und mindestens zwei Elektroden sowie eine Flüssigkeit, die sich als Dielektrikum eignet und die Bedingung gemäß Gleichung 1 erfüllt, aufweist.

Eine erfindungsgemäße Vorrichtung zur Trennung von metallischen und halbleitenden Kohlenstoff-Nanoröhren, die ein inhomogenes elektrisches Wechselfeld zur Verfügung stellt, umfasst Elektrodenpaare, die durch eine Lücke voneinander getrennt sind. Geeignet hierfür ist ein halbleitendes Substrat, vorzugsweise aus Silizium, vorzugsweise mit Bor dotiert, auf das eine Isolationsschicht bevorzugt aus Siliziumdioxid aufgebracht wurde, auf die ihrerseits mittels Elektronenstrahllithographie und anschließendem Metallisieren Elektroden vorzugsweise aus Gold aufgebracht wurden, an die eine Wechselspannung angelegt wird. Durch die Feldverteilung in dieser Anordnung wandert die metallische Spezies in Richtung der Elektroden und haftet dort - durch Ausrichtung des induzierten Dipolmoments in den metallischen Teilchen entlang der Feldlinien - parallel nebeneinander senkrecht zur Oberfläche der Elektroden an. Die halbleitenden Kohlenstoff-Nanoröhren bleiben dagegen in der Flüssigkeit (Suspension) zurück.

Die Trennung von metallischen und halbleitenden Kohlenstoff-Nanoröhren ist die Voraussetzung für eine zielgerichtete Erzeugung von nanoelektronischen Strukturen wie zum Beispiel molekularen Drähten oder Feldeffekt-Transistoren.

Die Erfindung wird im Folgenden anhand eines Ausführungsbeispiels mit Hilfe der Abbildungen näher erläutert. Dabei zeigen

Fig. 1　Schematische Darstellung einer Vorrichtung zur Trennung metallischer von halbleitenden Kohlenstoff-Nanoröhren mittels Wechselfeld-Dielektrophorese;

Fig. 2　Raman-Spektren an verschiedenen Punkten einer Referenzprobe;

Fig. 3　Raman-Spektren an verschiedenen Punkten zwischen den Metall-Elektroden;

Fig. 4　Korrelation zwischen möglichen Anregungsenergien und Atmungsmodenfrequenz in Bezug zum Durchmesser der Kohlenstoff-Nanoröhren.

In einem ersten Schritt wird zunächst eine Suspension aus vereinzelten Kohlenstoff-Nanoröhren bereitgestellt. Als Ausgangsmaterial finden Kohlenstoff-Nanoröhren, die mit dem so genannten *HiPco-Verfahren* [4] hergestellt wurden, Verwendung. Hierzu wird 50 mg *HiPco*-Rohrruß in eine Lösung aus 100 ml $D_2O$ mit 1% Natriumdodecylsulfat (SDS), einem Tensid, gegeben und 10 Minuten mit einem Ultraschallfinger mit einem Durchmesser von 13 mm und einer Leistung von 200 W einer Ultraschallbehandlung unterzogen. Anschließend wird diese Suspension 4 Stunden lang mit 180000 g zentrifugiert. Abschließend wird der Überstand vorsichtig vom Feststoff dekantiert.

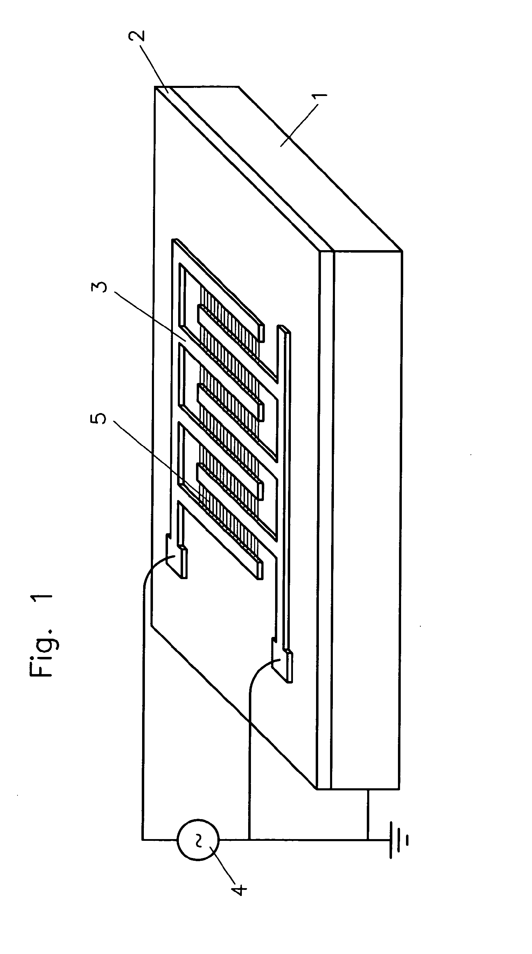

Die Metallelektroden 3 zur Erzeugung von inhomogenen elektrischen Wechselfeldern werden auf einem Substrat (1,2) wie folgt hergestellt und verschaltet. Als Substrat 1 findet, wie in Fig. 1 dargestellt, Bor dotiertes Silizium mit einem spezifischen elektrischen Widerstand von ρ > 1 Ω·cm Verwendung, auf das eine 600 nm dicke, thermisch oxidierte Isolationsschicht 2 aus Siliziumdioxid ($SiO_2$) aufgebracht wurde, wodurch sich eine Gesamtdicke von 525 µm ergibt. Die lateralen Abmessungen der Probe betragen 8 mm x 4 mm.

Mittels Standardelektronenstrahllithographie wird in ein Resist aus Polymethylmethacrylat (PMMA) eine Elektrodenstruktur geschrieben und anschließend entwickelt. Die Metallisierung der Elektrodenstruktur nach Fig. 1 erfolgt in einer Hochvakuumzerstäubungsanlage. Hierzu wird eine 2 nm dicke Schicht aus Titan als Haftvermittler und anschließend eine 30 nm dicke Schicht aus Gold auf die vorbereitete Elektrodenstruktur aufgesputtert. Die Kontakte der Elektroden 3 werden an einen Funktionsgenerator 4 als Wechselspannungsquelle angeschlossen.

Zur Trennung der metallischen von den halbleitenden Kohlenstoff-Nanoröhren werden zunächst 2 ml der Suspension, die vereinzelte Kohlenstoff-Nanoröhren enthält, auf die Elektroden 3 aufgetropft. Anschließend wird der Funktionsgenerator 4, der bei einer Ausgangsfrequenz von 10 MHz und einer Wechselspannung mit einer Peak-to-Peak-Amplitude $V_{p-p}$ = 10 V betrieben wird, für 10 Minuten zur Wechselfeld-Dielektrophorese eingeschaltet. Nach Abschalten des Wechselfeldes wird die sich um die Elektroden 3 befindliche Suspension abpipettiert und die Oberfläche mit Stickstoff trocken geblasen. Auf der Oberfläche zwischen den Metallelektroden befinden sich abgeschieden metallische Kohlenstoff-Nanoröhren 5, die durch Ultraschallbehandlung in einer neuen Suspension aus $D_2O$ mit 1% Natriumdodecylsulfat (SDS) abgelöst werden. Diese neue Suspension enthält metallische Kohlenstoff-Nanoröhren 5 und ist praktisch frei von der halbleitenden Spezies.

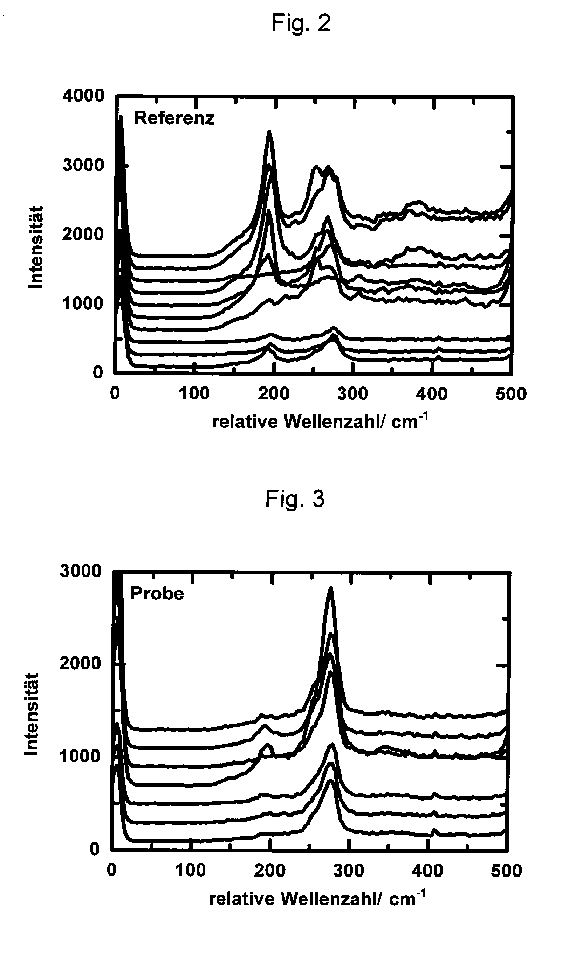

Fig. 2 zeigt Raman-Spektren, die an verschiedenen Punkten auf einer Referenzprobe aufgenommen wurden. Die verschiedenen Spektren sind mit ihrer Intensität in willkürlichen Einheiten gegenüber der Wellenzahl in $cm^{-1}$ bezogen auf die Anregungswellenlänge aufgetragen. Die Referenzprobe wurde durch Auftropfen von der ursprünglichen Suspension aus vereinzelten Kohlenstoff-Nanoröhren auf ein Substrat aus Silizium hergestellt. Zwei Linien, davon eine im Spektralbereich unterhalb von 200 $cm^{-1}$ und eine um 275 $cm^{-1}$, dominieren die Spektren.

Fig. 3 zeigt Raman-Spektren, die an verschiedenen Punkten zwischen Metallelektroden aufgenommen wurden. Die Auftragung der Spektren erfolgte wie bei Fig. 2. Eine Linie um 275 $cm^{-1}$ dominiert hier die Spektren.

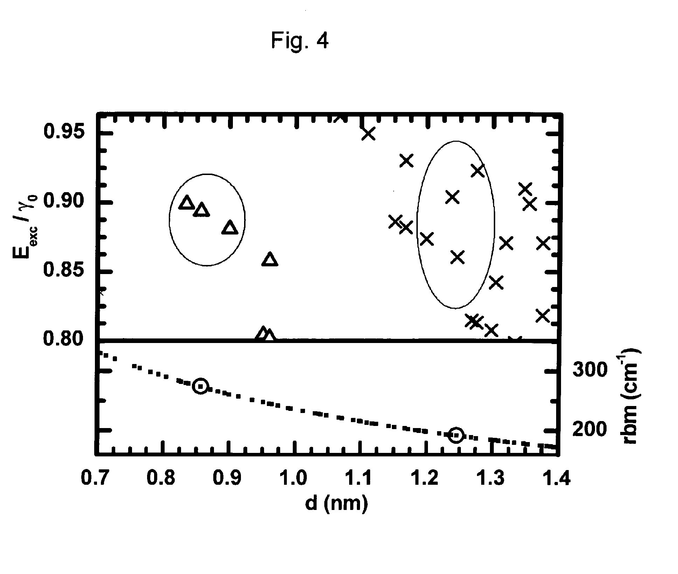

Fig. 4 dient der Interpretation der Daten und stellt die errechneten Anregungsenergien und die gemessenen Linien, die sich als Atmungsmoden für unterschiedliche Röhrendurchmesser deuten lassen, gegenüber. Durch theoretische Unsicherheiten in $\gamma_0$, d.h. dem Überlappintegral bei *Tight-binding*-Rechnungen, kommen bei der verwendeten Anregungswellenlänge von λ = 514 nm Kohlenstoff-Nanoröhren mit den dargestellten Durchmessern als Ursache für die beobachtete Raman-Streuung in Frage. Die deutlich verschiedenen Frequenzen der Atmungsmoden (*radial* breath*ing modes,* kurz *rbm)* erlauben jedoch eindeutig die Aussage, dass metallische Röhren für Atmungsfrequenzen bei 274 $cm^{-1}$ verantwortlich sind und dass Atmungsfrequenzen, die bei 192 $cm^{-1}$ liegen, von halbleitenden Röhren stammen.

Aus dieser Feststellung ergibt sich schlüssig, dass, wie aus einem Vergleich der Raman-Spektren nach den **Fig. 2** und **3** erkennbar, zwischen den Metallelektroden praktisch ausschließlich die metallische Spezies der Kohlenstoff-Nanoröhren vorliegt.

### Referenzen

[1] Bachilo S. M. et al., *Science,* Band 298 (2002), Seite 2361;
[2] Dresselhaus M. S. und Eklund P. C., *Advances in Physics,* Band 6 (2000), Seiten 705-814;
[3] Ding et al., *Phys. Rev. B,* Band 66 (2002), Seite 73401;
[4] P. Nikolaev, *Chem. Phys. Lett.*, Band 313 (1999), Seite 91.

### Patentansprüche

1. Verfahren zur Trennung von metallischen und halbleitenden Kohlenstoff-Nanoröhren, umfassend die folgenden Verfahrensschritte:

   a) Bereitstellen einer Suspension, enthaltend eine Vielzahl einzelner metallischer und halbleitender Kohlenstoff-Nanoröhren in einer Flüssigkeit, deren Dielektrizitätskonstante $\varepsilon_L$ die Bedingung

   $$\varepsilon_M > \varepsilon_L > \varepsilon_H$$

   erfüllt, wobei $\varepsilon_M$ die Dielektrizitätskonstante der metallischen Kohlenstoff-Nanoröhren und $\varepsilon_H$ die Dielektrizitätskonstante der halbleitenden Kohlenstoff-Nanoröhren sind;
   b) Anlegen eines inhomogenen elektrischen Wechselfeldes im Bereich der Suspension, wobei das Feld die metallischen und halbleitenden Kohlenstoff-Nanoröhren räumlich voneinander trennt;
   c) Entnehmen einer oder beider der getrennten Spezies.

2. Verfahren nach Anspruch 1, **dadurch gekennzeichnet, dass** die Kohlenstoff-Nanoröhren als Suspension in Wasser eingebracht werden.

3. Verfahren nach Anspruch 2, **dadurch gekennzeichnet, dass** ein Trennmittel zugegeben wird.

4. Verfahren nach einem der Ansprüche 1 bis 3, **dadurch gekennzeichnet, dass** das Wechselfeld eine Peak-to-Peak-Feldstärke ausgewählt aus dem Bereich zwischen $10^3$ V/m und $10^9$ V/m aufweist.

5. Verfahren nach Anspruch 4, **dadurch gekennzeichnet, dass** das Wechselfeld eine Peak-to-Peak-Feldstärke ausgewählt aus dem Bereich zwischen $10^4$ V/m und $10^6$ V/m aufweist.

6. Verfahren nach einem der Ansprüche 1 bis 5, **dadurch gekennzeichnet, dass** das Wechselfeld eine Frequenz ausgewählt aus dem Bereich zwischen 10 kHz und 100 GHz aufweist.

7. Verfahren nach Anspruch 6, **dadurch gekennzeichnet, dass** das Wechselfeld eine Frequenz ausgewählt aus dem Bereich zwischen 1 MHz bis 100 MHz aufweist.

8. Verwendung einer Dielektrophorese-Zelle, umfassend mindestens zwei Elektroden und ein flüssiges Dielektrikum, zur Trennung von metallischen und halbleitenden Kohlenstoff-Nanoröhren.

9. Verwendung einer Vorrichtung, bestehend aus

   - einem halbleitenden Substrat (**1**),
   - auf dem sich eine Isolationsschicht (**2**) befindet,
   - auf die Metallelektroden (**3**) aufgebracht sind,
   - die über Kontakte an eine Wechselspannungsquelle (**4**) angeschlossen sind, zur Trennung von metallischen und halbleitenden Kohlenstoff-Nanoröhren.

10. Verwendung der Vorrichtung nach Anspruch 9, wobei das halbleitende Substrat (**1**) Silizium, die Isolationsschicht (**2**) Siliziumdioxid und die Metallelektroden (**3**) Gold umfassen, zur Trennung von metallischen und halbleitenden Kohlenstoff-Nanoröhren.

Fig. 1

## Fig. 2

## Fig. 3

Fig. 4